# EUROPÄISCHE PATENTSCHRIFT

(11) **EP 2 765 100 B1**
(45) Veröffentlichungstag und Bekanntmachung des Hinweises auf die Patenterteilung: **27.07.2016**
(21) Anmeldenummer: 14154228.2
(22) Anmeldetag: 07.02.2014
(51) Int. Cl.: B65G 67/20

(54) **Transportsystem und Transportwagen für Paletten**
Transport system and transport trolley for pallets
Système de transport et chariot de transport pour palettes

(30) Priorität: 08.02.2013 DE 102013202074
(43) Veröffentlichungstag der Anmeldung: 13.08.2014
(73) Patentinhaber: Alfred Arnold eingetragener Kaufmann Verladesysteme, 70439 Stuttgart (DE)
(72) Erfinder:
(74) Vertreter: Patentanwälte Ruff, Wilhelm, Beier, Dauster & Partner mbB

(56) Entgegenhaltungen:
- EP-A1- 0 577 467
- EP-A1- 1 439 107
- EP-A1- 2 100 831
- DE-U1- 29 922 540
- US-A- 4 457 424

## Beschreibung

Die Erfindung betrifft ein Transportsystem für Paletten nach dem Oberbegriff des Anspruchs 1.

Aus der europäischen Offenlegungsschrift EP 2 100 831 A1 ist ein Transportsystem für Paletten bekannt, bei dem mehrere selbstfahrende Transportwagen vorgesehen sind, die jeweils geeignet sind, eine zu einer Fahrbahn hin offene Durchgangsöffnung zwischen einer auf der Fahrbahn stehenden Palette und der Fahrbahn in zwei entgegengesetzten Richtungen vollständig zu durchfahren. Die Transportwagen sind mit jeweils einem Kabel mit Energie und Daten versorgt. Die Kabel gehen jeweils von einem Ende der Transportwagen aus und werden über die Fahrbahn nachgeschleppt. Die Kabel sind unter die Fahrbahnoberfläche umlenkt und werden unterhalb der Fahrbahnoberfläche dann seitlich umgelenkt und dadurch aus dem Bereich unterhalb der Fahrbahn herausgeführt.

Aus der US-Patentschrift US 4,457,424 ist eine Vorrichtung bekannt, mit der eine beladene Palette mittels Zugseilen von einer Laderampe auf die Ladefläche eines LKWs gezogen werden kann. Die Zugseile greifen hierzu an einer Schubvorrichtung an, die dann wiederum die Palette in Richtung auf Ladefläche des Lastkraftwagens schiebt Die Zugseile sind links und rechts einer Fahrbahn der Palette oberhalb des Niveaus der Fahrbahn geführt. Am Ende der Laderampe werden die Zugseile dann nach unten umgelenkt und auf einer Seiltrommel gespeichert. Die Seiltrommel ist außerhalb der Fahrbahn unterhalb der Fahrbahnebene angeordnet.

Aus der europäischen Offenlegungsschrift EP 0 577 457 A1 ist ein Kabel bekannt, das sowohl für die Versorgung mit Daten als auch für die Versorgung mit Energie ausgelegt ist.

Aus der europäischen Offenlegungsschrift EP 1 439 107 A1 ist ein elektrisch betriebener Hubwagen für Paletten bekannt. Der Hubwagen wird einseitig unter die Palette geschoben und kann diese dann anheben und bewegen.

Die Gebrauchsmusterschrift DE 299 22 540 U1 offenbart ein Transportsuptem für Paletten nach dem Oberbegriff des Anspruchs 1.

Mit der Erfindung soll ein verbessertes Transportsystem für Paletten bereitgestellt werden.

Die Lösung dieser Aufgabe erfolgt durch die Mekmale des Anspruchs 1. Es ist ein Transportsystem für Paletten mit wenigstens zwei selbstfahrenden Transportwagen vorgesehen, wobei die Transportwagen jeweils geeignet sind, eine zu einer Fahrbahn hin offene Durchgangsöffnung zwischen einer auf der Fahrbahn stehenden Palette und der Fahrbahn in zwei entgegengesetzten Richtungen vollständig zu durchfahren und wobei die Transportwagen mittels Kabel mit Energie und/oder Daten versorgt sind, bei dem die Kabel zu wenigstens einer Kabeltrommel führen, die unterhalb der Fahrbahn angeordnet ist.

Mittels Kabeltrommeln, die unterhalb der Fahrbahn angeordnet sind, lässt sich in überraschend einfacher Weise die Problematik der Kabelführung zu selbstfahrenden Transportwagen lösen. Die Kabel können dabei während der Bewegung der Transportwagen abschnittsweise auf der Fahrbahn aufliegen und können auch, entsprechend einer Bewegung der Transportwagen, von der Kabeltrommel abgezogen bzw. wieder auf die Kabeltrommel aufgerollt werden. Auf diese Weise können die Kabel immer im Wesentlichen geradlinig zu einer Umlenkstelle in der Fahrbahn geführt werden, von der aus die Kabel dann, vorteilhafterweise wieder geradlinig, zu den Kabeltrommeln geführt werden. Dadurch, dass die Kabel mittels der erfindungsgemäßen Lösung geradlinig auf der Fahrbahn aufliegen, ist das Risiko wesentlich minimiert, dass die Transportwagen die Kabel überrollen und gegebenenfalls beschädigen. Überraschenderweise hat sich auch herausgestellt, dass eine Anordnung der Kabeltrommeln unterhalb der Fahrbahn in der Regel weniger Aufwand verursacht als eine Führung und Speicherung der Kabel oberhalb der Fahrbahn. Gerade bei Logistikgebäuden, für die das erfindungsgemäße Transportsystem vorgesehen ist, stehen in der Regel geeignete Räume unterhalb der Fahrbahn zur Verfügung, um die wenigstens eine Kabeltrommel anordnen zu können. Bei Logistikgebäuden befindet sich eine Bodenfläche, die als Fahrbahn dienen kann, in der Regel etwa auf Höhe der Ladefläche eines Lastkraftwagens, also oberhalb des sonstigen Straßenniveaus. Eine Fahrbahn für die efindungsgemäßen Transportwagen liegt damit ebenfalls ausreichend weit oberhalb des üblichen Straßenniveaus, so dass unterhalb der Fahrbahn innerhalb des Logistikgebäudes Raum zur Anordnung von Kabeltrommeln zur Verfügung steht.

In Weiterbildung der Erfindung sind jedem Transportwagen ein Kabel und eine Kabeltrommel zugeordnet.

Auf diese Weise kann eine klare Zuordnung zwischen Kabel und Transportwagen erfolgen und das Risiko des Überrollens eines Kabel wird minimiert, da ja die erfindungsgemäßen Transportwagen in der Regel geradlinige Transportwege beim automatischen Verladen von Paletten zurücklegen. Jeweils zwei Transportwagen heben dabei eine oder mehrere im Wesentlichen fluchtend zueinander angeordnete Paletten an und verfahren diese dann. Beim Durchfahren der Durchgangsöffnungen der Paletten erleichtert die Zuordnung eines Kabels und einer Kabeltrommel zu jedem Transportwagen die Führung der Kabel erheblich.

In Weiterbildung der Erfindung ist im Bereich der Fahrbahn eine Kabelumlenkung vorgesehen und die wenigstens eine Kabeltrommel ist im Wesentlichen senkrecht zur Fahrbahn unterhalb der Kabelumlenkung angeordnet.

Auf diese Weise kann eine sehr platzsparende Anordnung geschaffen werden. In der Fahrbahn ist lediglich eine kleine Öffnung zum Anbringen der Kabelumlenkung erforderlich. Die Umlenkung des Kabels erfolgt dann vorteilhafterweise im rechten Winkel und die Kabeltrommel kann unmittelbar unterhalb oder leicht versetzt zu der Kabelumlenkung angeordnet werden. Auf diese Weise werden möglichst kurze Wege für das Kabel erreicht, wodurch die Länge des Kabels gering gehalten werden kann und das Risiko einer ungeordneten Führung des Kabels wird wesentlich verringert.

Die Fahrbahn erstreckt sich bis zu einer Laderampenkante und die Kabeltrommel ist im Bereich unterhalb der Laderampenkante angeordnet.

Auf diese Weise lässt sich eine besonders einfach zu realisierende Unterbringung der Kabeltrommeln erreichen. Zum einen steht unterhalb der Laderampenkante in der Regel genügend Raum zur Verfügung, um eine Kabeltrommel anzuordnen. Zum anderen verlassen die Transportwagen an der Laderampenkante die Fahrbahn und somit ein Logistikgebäude und setzen ihren Weg dann auf einer Ladefläche eines zu beladenden oder zu entladenden LKWs fort. Die Anordnung der Kabeltrommel im Bereich unterhalb der Laderampenkante ermöglicht es damit, dass ein Richtungswechsel an der Kabelumlenkung in der Fahrbahn etwa beim Verlassen der Fahrbahn durch die Transportwagen stattfindet. Während sich die Transportwagen auf der Ladefläche des LKWs befinden, liegen die Kabel damit im Wesentlichen nur auf der Ladefläche des LKWs auf, der Fahrbahnteil innerhalb des Logistikgebäudes ist dann aber frei von Kabeln und kann ohne Gefahr einer Beschädigung der Kabel befahren und begangen werden.

In Weiterbildung der Erfindung ist die Kabelumlenkung im Bereich der Laderampenkante angeordnet und die Kabeltrommel ist unterhalb der Laderampenkante so angeordnet, dass sich der Umfang der Kabeltrommel nicht über die Laderampenkante hinaus erstreckt.

In Weiterbildung der Erfindung ist die Laderampenkante an einem Vorbau angeordnet, der die Fahrbahn aus einem Gebäude heraus verlängert, wobei die Kabeltrommel innerhalb des Vorbaus angeordnet ist.

Auf diese Weise kann außerhalb eines Logistikgebäudes in einfacher Weise Raum für die Unterbringung der Kabeltrommeln geschaffen werden. Ein bestehendes Gebäude kann dadurch sehr einfach nachgerüstet werden, ohne am Gebäude selbst Veränderungen vornehmen zu müssen.

In Weiterbildung der Erfindung ist die Kabeltrommel ausgebildet, das Kabel zu den Transportwagen permanent unter Zug zu halten.

Auf diese Weise kann sichergestellt werden, dass das Kabel im Wesenlichen geradlinig von der Kabelumlenkung in der Fahrbahn zu den Transportwagen verläuft. Das Risiko eines Überrollens des Kabels wird dadurch wesentlich verringert.

In Weiterbildung der Erfindung weist das Kabel wenigstens zwei Energieleiter und wenigstens zwei Datenleiter auf.

Durch diese Maßnahmen kann ein einziges Kabel sowohl für die Energieversorgung des Transportwagens als auch für die Datenübertragung zu dem Transportwagen und von dem Transportwagen weg genutzt werden. Die Anzahl der Kabel kann dadurch pro Transportwagen auf ein einziges Kabel verringert werden, so dass damit auch das Risiko, das Kabel zu überrollen und zu beschädigen, wesentlich verringert ist. Beispielsweise wird ein Kabel mit einer verschleißfesten Ummantelung, drei Stromleitern und vier Doppeladern für die Datenübertragung verwendet.

In Weiterbildung der Erfindung weist das Kabel wenigstens zwei zueinander koaxiale Leiter auf. Solche koaxialen Leiter sind zum einen sehr gut für die schnelle und zuverlässige Übertragung sehr großer Datenmengen geeignet. Koaxiale Leiter können in gleicher Weise auch für die Energieübertragung genutzt werden. Vorteilhafterweise weist das Kabel ausschließlich zwei zueinander koaxiale Leiter auf, die für die Übertragung von Energie und Daten genutzt werden.

Durch diese Maßnahmen genügt ein einziges Koaxialkabel, um sowohl Energie als auch Daten zu dem Transportwagen und wieder von dem Transportwagen weg zu übertragen.

In Weiterbildung der Erfindung hat der Transportwagen für Paletten wenigstens einen elektrischen Antriebsmotor und wenigstens eine Steuereinheit für den Antriebsmotor, wobei der Transportwagen ausgebildet ist, eine zur Fahrbahn hin offene Durchgangsöffnung zwischen einer auf der Fahrbahn stehenden Palette und der Fahrbahn in zwei entgegengesetzten Richtungen vollständig zu durchfahren, wobei eine Übertragung von Energie und Daten zu und von dem Transportwagen mittels Kabeln erfolgt, und es ist ein einziges Kabel zur Übertragung von Energie und Daten vorgesehen.

Über ein solches einziges Kabel können Steuerdaten für eine Lenkung des Transportwagens sowie für einen Antrieb des Transportwagens übertragen werden. Darüber hinaus können Sensordaten übertragen werden, die beispielsweise zur Bestimmung bzw. Korrektur eines Fahrkurses des Transportwagens verwendet werden. Darüber hinaus kann auch die für die Antriebsmotoren erforderliche Antriebsenergie über das einzige Kabel übertragen werden.

In Weiterbildung der Erfindung weist das Kabel zwei Datenleiter auf und die Steuereinheit weist eine Schnittstelle für ein serielles Busprotokoll auf.

Mittels eines seriellen Busprotokolls können auch große Datenmengen für unterschiedlichste elektronische Einrichtungen über lediglich zwei Datenleiter übertragen werden.

Das Kabel weist ausschließlich zwei zueinander koaxiale Leiter auf, die für die Übertragung von Energie und Daten vorgesehen sind.

Weitere Merkmale und Vorteile der Erfindung ergeben sich aus den Ansprüchen und der folgenden Beschreibung bevorzugter Ausführungsformen der Erfindung im Zusammenhang mit den Zeichnungen. In den unterschiedlichen Zeichnungen dargestellte Einzelmerkmale können dabei in beliebiger Weise miteinander kombiniert werden, ohne den Rahmen der Erfindung, welche in dem Ansprüchen definiert wird, zu überschreiten. In den Zeichnungen zeigen:
- Fig. 1: eine teilweise geschnittene Seitenansicht eines Transportwagens,
- Fig. 2: eine abschnittsweise Seitenansicht eines erfindungsgemäßen Transportsystems mit mehreren Transportwagen gemäß Fig. 1,
- Fig. 3: eine abschnittsweise Ansicht des Transportsystems der Fig. 2 von schräg oben,
- Fig. 4: eine abschnittsweise Seitenansicht des Transportsystems der Fig. 3,
- Fig. 5: eine abschnittsweise Ansicht des Transportwagens der Fig. 1 von schräg oben,
- Fig. 6: die vergrößerte Einzelheit A aus Fig. 5,
- Fig. 7: eine abschnittsweise Ansicht des Transportwagens der Fig. 5 von unten,
- Fig. 8: eine Ansicht des Transportwagens der Fig. 5 von vorne, und
- Fig. 9: eine Vorderansicht eines Kabels für den Transportwagen.

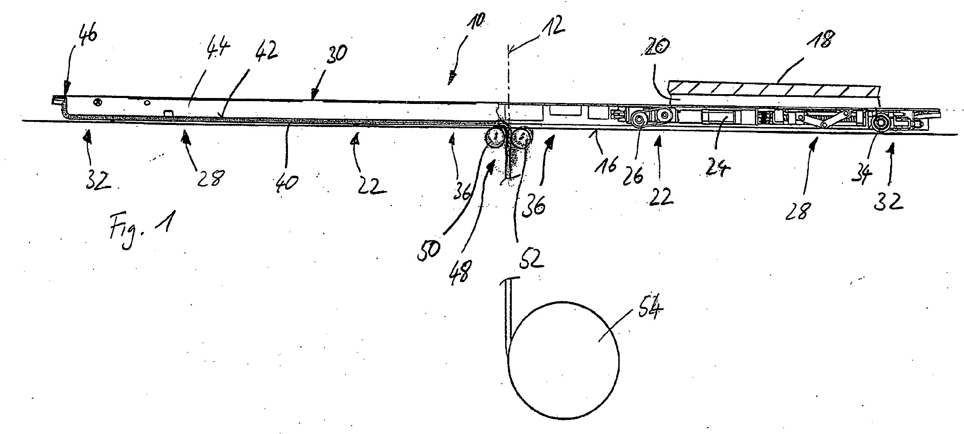

Die Darstellung der Fig. 1 zeigt einen Transportwagen 10 in einer Seitenansicht. Links einer Mittellinie 12 ist der Transportwagen 10 dabei vollständig dargestellt, rechts der Mittellinie 12 ist die dem Betrachter in Fig. 1 zugewandte Seitenwand weggeschnitten, um die mechanischen Komponenten des Transportwagens 10 darstellen zu können.

Der Transportwagen 10 ist für das Anheben, Transportieren und Absetzen von Paletten 18 vorgesehen. Dabei kann es sich beispielsweise um Euro-Paletten handeln, in jedem Fall handelt es sich um Paletten 18, die eine Durchgangsöffnung 20 zwischen einer Ladefläche der Palette 18 und einer Fahrbahn 16 aufweisen. Wenn die Palette 18, die in Fig. 1 lediglich abschnittsweise und im Schnitt dargestellt ist, auf der Fahrbahn 16 steht, so weist sie zwei zueinander parallel verlaufende Durchgangsöffnungen 20 zwischen der Oberseite bzw. Ladefläche der Palette 18 und der Fahrbahn 16 auf. Der Transportwagen 10 ist in seinem abgesenkten Zustand, der in Fig. 1 dargestellt ist, so flach und gleichzeitig so schmal, dass er in beiden Richtungen durch die Durchgangsöffnung 20 der Palette 18 hindurchfahren kann. Dadurch wird es ermöglicht, dass der Transportwagen 10 in die Palette 18 beispielsweise in Fig. 1 von links nach rechts einfahren kann, die Palette 18 dann anheben und beispielsweise in Fig. 1 nach links zu einer Ladefläche eines LKWs transportieren kann. Der Transportwagen 10 kann dann wieder abgesenkt werden und in der Darstellung der Fig. 1 nach rechts aus der Durchgangsöffnung 20 der Palette 18 herausfahren. Das Transportieren der Palette 18 mittels zweier Transportwagen 10 erfordert dadurch keine Wendemanöver der Transportwagen 10, da diese in beiden Richtungen vollständig durch die Durchgangsöffnung 20 der Palette 18 hindurchfahren können.

Der Transportwagen 10 ist mit einem Fahrantriebsmodul 22 versehen, das aus einem Antriebsmotor 24 und einer auf der Fahrbahn 16 aufliegenden Antriebsrolle 26 besteht, wobei Antriebsmotor 24 und Antriebsrolle 26 mittels eines Zahnriemens gekoppelt sind. Der Transportwagen 10 weist weiter ein Hubmodul 28 auf, das dazu dient, eine Tragschiene 30 des Transportwagens 10 relativ zur Fahrbahn gesehen anzuheben und wieder abzusenken. Die Tragschiene 30 wird dabei so weit angehoben, dass die Palette 18 von der Fahrbahn 16 abgehoben wird und damit mittels des Transportwagens 10 transportiert werden kann. Der Transportwagen 10 weist weiter ein Lenkmodul 32 auf, das eine Lenkachse 34 mit zwei Rollen und einen Lenkmotor aufweist. Das Lenkmodul 32 mit der Lenkachse 34 ist lediglich zur Richtungskorrektur vorgesehen, da die Transportwagen 10 generell geradlinige Fahrkurse durchführen sollen. Das Lenkmodul 32 weist daher eine sogenannte Drehschemellenkung auf, die lediglich für kleine Richtungskorrekturen ausgelegt ist.

Der Transportwagen 10 weist schließlich ein Elektronikmodul 36 auf, in dem Steuereinheiten für das Fahrantriebsmodul 22, das Hubmodul 28 und das Lenkmodul 32 angeordnet sind. Weiter weist das Elektronikmodul 36 Steuereinheiten auf, um in Fig. 1 nicht dargestellte Sensoren an dem Transportwagen 10 betreiben und deren Signale auswerten zu können. Dies können beispielsweise Abstandssensoren sein, um den seitlichen Abstand des Transportwagens 10 zu einem parallel fahrenden Transportwagen 10 überwachen zu können oder auch um den Abstand des Transportwagens 10 zu einer seitlich angeordneten Ladebordwand eines LKWs feststellen zu können. Darüber hinaus sind Sensoren vorgesehen, um einen Bereich vor und hinter dem Transportwagen 10 zu überwachen, um Kollisionen des Transportwagens 10 mit einer Begrenzung einer Ladefläche eines LKWs oder sonstigen Hindernissen zu vermeiden.

Der Transportwagen 10 ist im Wesentlichen symmetrisch zur Mittellinie 12 aufgebaut. Auf der in Fig. 1 links der Mittellinie 12 dargestellten Seite des Transportwagens 10 sind daher ebenfalls, ausgehend von der Mittellinie 12, ein Elektronikmodul 36, ein Fahrantriebsmodul 22, ein Hubmodul 28 sowie ein Lenkmodul 32 angeordnet.

Eine Energieversorgung und eine Übertragung von Daten zu dem Transportwagen 10 und von dem Transportwagen 10 weg erfolgt mittels eines Kabels 40. Das Kabel 40 ist in dem in Fig. 1 dargestellten Zustand zwischen der Fahrbahn 16 und einer Unterkante 42 einer Seitenwand 44 der Tragschiene 30 des Transportwagens 10 angeordnet. Das Kabel 40 liegt dabei auf der Fahrbahn 16 auf und ist an dem in Fig. 1 links angeordneten Ende 46 des Transportwagens 10 in diesen hineingeführt. Der Transportwagen 10 ist in Fig. 1 in einem Zustand dargestellt, in dem seine Mittellinie 12 auf Höhe einer Kabelumlenkung 48 in der Fahrbahn 16 angeordnet ist. Die Kabelumlenkung 48 weist zwei in Fahrtrichtung des Transportwagens 10 gesehen hintereinander angeordnete Umlenkrollen 50, 52 auf, zwischen denen das Kabel 40 in den Bereich unterhalb der Fahrbahn 16 geführt ist. Bewegt sich daher der Transportwagen in der Darstellung der Fig. 1 nach links, zieht er gleichzeitig das Kabel 40 mit, so dass diese hauptsächlich an der linken Umlenkrolle 50 anliegt und aus dem Bereich unterhalb der Fahrbahn 16 herausgezogen wird. Bewegt sich der Transportwagen 10 ausgehend von der Position der Fig. 1 nach rechts, wird das Kabel 40 wieder über die linke Umlenkrolle 50 in den Bereich unterhalb der Fahrbahn 16 geleitet. Ist das Ende 46 oberhalb der Kabelumlenkung 48 angelangt, legt sich das Kabel 40 an die rechte Umlenkrolle 52 an und bei einer Weiterbewegung des Transportwagens 10 in Fig. 1 nach rechts wird das Kabel 40 dann wieder aus dem Bereich unterhalb der Fahrbahn 16 herausgezogen. Auch in diesem Fall liegt das Kabel 40 dann auf der Fahrbahn 16 auf. Die Umlenkrollen 50, 52 sind so angeordnet, dass sie nicht über die Fahrbahn 16 nach oben hinausragen und dadurch problemlos von dem Transportwagen 10 überfahren werden können.

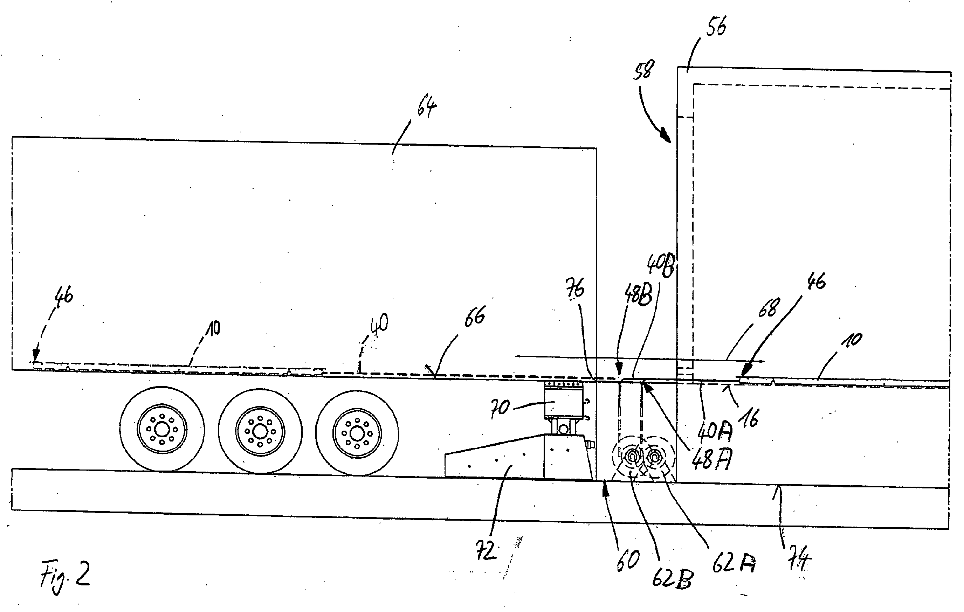

Unterhalb der Fahrbahn 16 ist eine in Fig. 1 lediglich schematisch dargestellte Kabeltrommel 52 angeordnet, auf die das Kabel 40 aufgerollt werden kann und von der das Kabel 40 auch wieder abgerollt werden kann, je nachdem in weicher Richtung und wie weit sich der Transportwagen 10 auf der Fahrbahn bewegt. Das in Fig. 1 gezeigte Transportsystem ist nicht Teil der vorliegenden Erfindung.
Die Darstellung der Fig. 2 zeigt eine Seitenansicht eines erfindungsgemäßen Transportsystems. Innerhalb eines lediglich schematisch dargestellten Gebäudes 56 ist die Fahrbahn 16 angeordnet, die durch ein Ladetor 58 des Gebäudes hindurch bis zum Ende eines Vorbaus 60 führt. Der Vorbau 60 verlängert die Fahrbahn 16 über das Gebäude 56 hinaus und schafft unterhalb der Fahrbahn 16 Raum für die Anordnung von insgesamt sechs Kabeltrommeln 62, wobei in der Darstellung der Fig. 2 lediglich zwei Kabeltrommeln 62A und 62B zu erkennen sind. Das Ende der Fahrbahn 16 am Vorbau 60 bildet eine Ladekante 76, an die in dem Zustand der Fig. 2 ein Anhänger 64 eines im Übrigen nicht dargestellten LKWs herangefahren ist. Der Anhänger 64 ist dabei so dicht an die Laderampenkante 76 am Vorbau 60 herangefahren, dass eine Ladefläche 66 des Anhängers 64 die Fahrbahn 16 im Wesentlichen nahtlos fortsetzt. Ein geringer Zwischenraum zwischen dem Ende der Fahrbahn 16 an der Ladekante 76 und dem Beginn der Ladefläche 66 kann dabei durchaus vorhanden sein, solange dieser Zwischenraum von den Transportwagen 10 problemlos überfahren werden kann.

Die Transportwagen 10 sind in der Darstellung der Fig. 2 in einer Position innerhalb des Gebäudes 56 dargestellt. Die Transportwagen 10 können sich in den Richtungen des Doppelpfeils 68 bewegen, also von dem Gebäude 56 auf die Ladefläche 66 und wieder zurück. Wie erläutert wurde, dienen die Transportwagen 10 dabei zum automatischen Beladen und Entladen des Anhängers 64 mit Paletten. Die Paletten werden hierzu innerhalb des Gebäudes 56 von zwei parallel zueinander stehenden Transportwagen 10 angehoben, dann vom Gebäude 56 auf die Lagefläche 66 des Anhängers 64 gefahren und dort abgesetzt. Nach dem Absetzen der Paletten auf der Ladefläche 66 des Anhängers 64 kehren die Transportwagen 10 dann wieder in das Gebäude 56 zurück, um gegebenenfalls weitere Paletten aufzunehmen. Das automatische Entladen des Anhängers 64 geschieht in umgekehrter Reihenfolge.

Um sicherzustellen, dass die Ladefläche 66 im Wesentlichen fluchtend zu der Fahrbahn 16 angeordnet ist und zwischen der Ladekante am Vorbau 60 und dem in Fig. 2 rechten Ende der Ladefläche 66 lediglich ein geringer Zwischenraum besteht, ist der Anhänger 64 auf seiner Unterseite mit einer Gleitkufenanordnung 70 versehen, die beim Heranfahren an den Vorbau 60 mittels einer Führungsrampe 72 geführt wird. Die Führungsrampe 72 weist einen Endanschlag und Haltemittel auf, um den Anhänger 64 mittels Blockieren der Gleitkufenanordnung 70 in die in Fig. 2 dargestellte Position zu führen und in dieser Position auch gegen Wegfahren festzuhalten. Mittels der Gleitkufenanordnung 70 und den Führungsrampen 72 ist dadurch sichergestellt, dass die Ladefläche 66 sich in der in Fig. 2 dargestellten Position befindet, in der die Ladefläche 66 mit der Fahrbahn 16 im Wesentlichen fluchtet und lediglich ein geringer Zwischenraum zwischen dem in Fig. 2 rechten Ende der Ladefläche 66, also dem in Vorwärtsfahrtrichtung des Anhängers 64 gesehen hinteren Ende und dem Ende der Fahrbahn 16 an der Ladekante 76 des Vorbaus 60 vorhanden ist.

Wie in der Darstellung der Fig. 2 zu erkennen ist, wird das Kabel 40A des im Gebäude 46 befindlichen Transportwagens 10 bei einer Bewegung des Transportwagens 10 in Richtung auf die Ladefläche 66 zu an der Kabelumlenkung 48A im Vorbau 60 senkrecht nach unten umgelenkt und auf die Kabeltrommel 62A geleitet. In gleicher Weise wird das Kabel 40B eines parallel zu dem dargestellten Transportwagen 10 fahrenden und dadurch verdeckten weiteren Transportwagens 10 an der Kabelumlenkung 48 senkrecht nach unten umgelenkt und zu der Kabeltrommel 62B geführt. Die Kabeltrommeln 62A, 62B sind gestrichelt dargestellt, da sie in der Seitenansicht der Fig. 2 an und für sich nicht zu erkennen sind. Die Kabeltrommeln 62A, 62B halten die Kabel 40a, 40B unter Zugspannung, so dass diese immer im Wesentlichen geradlinig von den Transportwagen 10 zu den jeweiligen Kabelumlenkungen 48A, 48B verlaufen.

Wenn das in Fig. 2 linke Ende 46 des Transportwagens 10 die Kabelumlenkung 48A passiert, ändert die Kabeltrommel 62A ihre Richtung, da das Kabel 40A dann nicht mehr eingezogen sondern ausgegeben werden muss. Setzt der Transportwagen 10 dann seinen Weg auf die Ladefläche 66 fort, bis er die in Fig. 2 links gestrichelt dargestellte Position erreicht hat, gibt die Kabeltrommel 62A fortlaufend das Kabel 40A aus, die dann unterhalb der Unterkante 42 der Seitenwand 44 des Transportwagens 10 zu liegen kommt, siehe Fig. 1, und die zwischen dem Transportwagen 10 und der Kabelumlenkung 48A dann auf der Ladefläche 66 des Anhängers 64 aufliegt. Zwischen der Ladekante 76 des Vorbaus 60 und der Kabelumlenkung 48A liegt ein kleines Stück des Kabels 40 noch auf der Fahrbahn 16 auf.

In gleicher Weise wird das Kabel 40B zunächst auf die Kabeltrommel 62B aufgerollt, bis der zugeordnete Transportwagen die Kabelumlenkung 48B passiert und sich weiter in Richtung auf die Ladefläche 66 bewegt.

Kehren die Transportwagen 10 von der Ladefläche 66 wieder in das Gebäude 56 zurück, werden die Kabel 40A, 40B wieder auf die Kabeltrommeln 62A, 62B aufgerollt, bis das in Fig. 2 linke Ende 46 die Kabelumlenkung 48A bzw. 48B passiert. Bewegen sich die Transportwagen 10 dann weiter in das Gebäude 56 hinein, werden die Kabel 40A, 40B wieder von den Kabeltrommeln 62A bzw. 62B abgezogen.

Insgesamt sind innerhalb des Vorbaus 60 sechs Kabeltrommeln 62 angeordnet. Nebeneinander stehende Kabeltrommeln sind dabei aus Platzgründen in Richtung 68 zueinander versetzt, um genügend Raum für die Anordnung der Kabeltrommeln selbst, vor allem für deren Befestigungen auf einer Grundfläche 72 zu haben, die eine Grundfläche des Vorbaus 60 und gleichzeitig das Straßenniveau bildet, auf dem die Räder des Anhängers 64 stehen. Der Vorbau 60 ist zweckmäßigerweise als Modul ausgebildet und wird vorgefertigt angeliefert. In diesem Fall sind die Kabeltrommeln 62 dann auf einer Bodenfläche des Vorbaus 60 befestigt, der dann insgesamt auf der Grundfläche 72 befestigt wird.

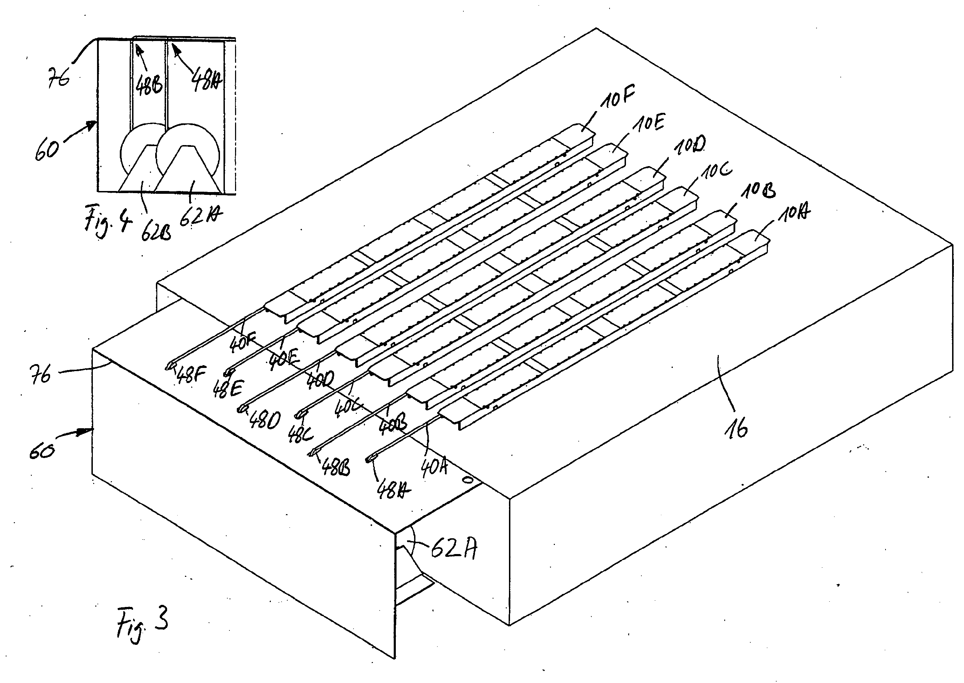

Die Darstellung der Fig. 3 zeigt das Transportsystem der Fig. 2 abschnittsweise in einer Ansicht von schräg oben. Das Gebäude 56 ist der Übersichtlichkeit halber nicht dargestellt, lediglich die Fahrbahn 16 ist als Oberfläche eines quaderförmigen Blocks dargestellt, der den Unterteil des Gebäudes 56 symbolisieren soll. Auf der Fahrbahn 16 sind insgesamt sechs Transportwagen 10A, 10B, 10C, 10D, 10E und 10F angeordnet, die parallel zueinander stehen. Jeweils zwei der Transportwagen 10 bilden ein Paar und sind dafür vorgesehen, parallel zueinander in die beiden Durchgangsöffnungen einer Palette einzufahren. Dabei bilden die Transportwagen 10A, 10B ein erstes Paar, die Transportwagen 10C, 10D ein zweites Paar und die Transportwagen 10E, 10F ein drittes Paar. Jeder der Transportwagen 10 weist eine Länge auf, die im Wesentlichen der Länge von drei hintereinander angeordneten Paletten entspricht. Die beiden Transportwagen 10A, 10B können somit drei hintereinander stehende Paletten gemeinsam aufnehmen und von der Fahrbahn 16 auf die Ladefläche 66 des Anhängers 64 transportieren. Insgesamt können die sechs Transportwagen 10 damit neun Paletten gleichzeitig aufnehmen, in den Anhänger 64 transportieren und dort auf dessen Ladefläche 66 absetzen. Das erfindungsgemäße Transportsystem ermöglicht dadurch die automatische Verladung von Paletten in einen Anhänger 64, wobei der Anhänger 64 mit Ausnahme der Gleitkufenanordnung 70 nicht speziell für eine solche automatische Verladung ausgelegt sein muss.

Die von den Transportwagen 10 ausgehenden Kabel 40A, 40B, 40C, 40D, 40E bzw. 40F sind jeweils zu einer Kabelumlenkung 48A, 48B, 48C, 48D, 48E bzw. 48F geführt, wobei an diesen Kabelumlenkungen 48 die Kabel 40 jeweils senkrecht nach unten zu den zugeordneten Kabeltrommeln 62 geführt werden. In der Darstellung der Fig. 3 ist lediglich die Kabeltrommel 62A abschnittsweise zu erkennen. Die Kabelumlenkungen 48 sind dabei in gleicher Weise zueinander versetzt, wie die Kabeltrommeln 62, vergleiche Fig. 2, Fig. 4.

Der Vorbau 60 ist in Fig. 3 als einfache, abgekantete Platte dargestellt, der die Fahrbahn 16 über das Gebäude 56 hinaus verlängert, so dass diese dann an der Ladekante 76 endet. Die Kabeltrommeln 62 sind dabei vollständig innerhalb des Vorbaus 60 angeordnet, unterhalb der Ladekante 76 ist dadurch lediglich eine Vorderwand des Vorbaus 60 angeordnet. Der Vorbau 60 kann in einfacher Weise an ein bestehendes Gebäude 56 angebaut werden, um dadurch mit geringem Aufwand Platz für die Kabelumlenkungen 48 und die Kabeltrommeln 62 zu schaffen. Besonders vorteilhaft ist hierbei, dass ein bestehendes Gebäude ohne wesentliche Umbauten mit dem erfindungsgemäßen Transportsystem ausgestattet werden kann. Wie anhand der Fig. 2 zu erkennen ist, müssen hierzu lediglich der Vorbau 60 mit den Kabeltrommeln 62 und den Kabelumlenkungen 48 sowie die Führungsrampen 72 vor dem Vorbau 60 angeordnet werden. Gegebenenfalls kann ein speziell ausgebildetes Ladetor 58 erforderlich sein, um den in Fig. 2 erkennbaren Zwischenraum zwischen der Wand des Gebäudes 56 und dem hinteren Ende des Anhängers 64 zu überbrücken und diesen Zwischenraum dadurch gegen Witterungseinflüsse zu schützen.

Die Darstellung der Fig. 4 zeigt den Vorbau 60 in einer Seitenansicht. Insgesamt sechs Kabeltrommeln 62 sind innerhalb des Vorbaus 60 angeordnet, wobei jeweils drei Kabeltrommeln fluchtend zueinander angeordnet sind. In der Ansicht der Fig. 4 sind daher lediglich die beiden vorderen Kabeltrommeln 62A, 62B zu erkennen. Fluchtend zu der Kabeltrommeln 62A wäre eine dritte Kabeltrommel 62C angeordnet, wobei seitlich versetzt zwischen den beiden Kabeltrommeln 62A, 62C dann die Kabeltrommel 62B angeordnet ist. Durch diese versetzte Anordnung der Kabeltrommeln wird Raum geschaffen, um die Kabeltrommeln 62 auf einer Grundfläche des Vorbaus 60 zu befestigen.

Die Kabelumlenkungen 48A bis 48F, von denen in Fig. 4 lediglich die beiden Kabelumlenkungen 48A und 48B zu erkennen sind, sind lediglich schematisch dargestellt, weisen aber geeignete Umlenkeinrichtungen auf, beispielsweise die in Fig. 1 dargestellten Umlenkrollen 50, 52. Der Vorbau 60 kann beispielsweise als Metallteil ausgebildet sein und wird vormontiert mit den Kabeltrommeln 62 und den Kabelumlenkungen 48 vor dem Gebäude 56 befestigt.

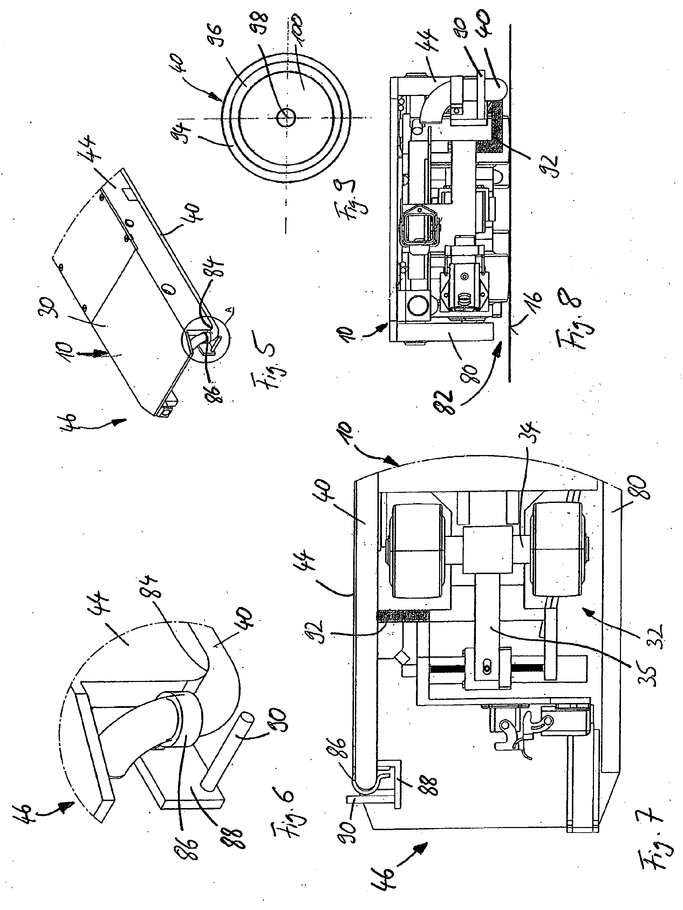

Die Darstellung der Fig. 5 zeigt abschnittsweise den Transportwagen 10 im Bereich des Endes 46, an dem das Kabel 40 in den Transportwagen 10 hineingeführt ist. Wie bereits erläutert wurde, ist eine Seitenwand 44 der Tragschiene 30 des Transportwagens 10 so bemessen, dass auch im abgesenkten Zustand des Transportwagens 10 das Kabel 40 noch unterhalb der Unterkante der Seitenwand 44 und der Fahrbahn 16 angeordnet werden kann, ohne dass das Kabel 40 dabei gequetscht wird. Die gegenüberliegende Seitenwand 80 des Transportwagens 10, siehe Fig. 8, ist höher ausgeführt, so dass zwischen einer Unterkante der Seitenwand 80 und der Fahrbahn 60 im abgesenkten Zustand des Transportwagens, wie er in Fig. 8 dargestellt ist, nur noch ein Zwischenraum 82 vorhanden ist, dessen Höhe geringer ist als der Durchmesser des Kabels 40. Der Zwischenraum 82 ist dabei so bemessen, dass zuverlässig verhindert wird, dass das Kabel 40 zwischen die Fahrbahn 16 und die Unterkante der Seitenwand 80 gelangen kann. Die Seitenwand 80 dient dadurch als Kabelabweiser und verhindert, dass das Kabel 40 der Seite der Seitenwand 80 her unter den Transportwagen 10 gelangt und dann überrollt wird.

In Fig. 5 und Fig. 6 ist zu erkennen, dass eine vordere untere Ecke 84 der Seitenwand 44 abgerundet ist, um das Kabel 40 sanft umzulenken. Die Kabel 40 ist um die Ecke 84 der Seitenwand 44 herumgeführt, ist dann in einer Kabelhalteschelle 86 an einem Träger 88 geführt und ist dann in das Innere des Transportwagens 10 weitergeleitet. An einem in Fig. 5 und Fig. 6 freien Ende des Trägers 88, wobei dieses freie Ende auf Höhe des Endes des Transportwagens 10 angeordnet ist, befindet sich ein Abweiserstab 90, der seitlich von dem Träger 88 absteht. Dieser Abweiserstab 90 befindet sich auf Höhe der Ecke 84 der Seitenwand 44 und lenkt das Kabel 40 um, wenn das Ende 46 des Transportwagens 10 die zugeordnete Kabelumlenkung 48 passiert hat und das Kabel dann entgegengesetzt umgebogen wird, wie in Fig. 6 dargestellt ist, in Fig. 5 und Fig. 6 also ausgehend von der Kabelschelle 86 nach links unten.

Die Darstellung der Fig. 7 zeigt das Ende 46 des Transportwagens 10 von unten. Im Bereich dieses freien Endes ist das Lenkmodul 32 mit der als Starrachse ausgebildeten Lenkachse 34 angeordnet, die an ihren beiden freien Enden jeweils eine Rolle trägt. Die Lenkachse 34 ist mit einem Lenkhebel 35 starr verbunden, der in der Darstellung der Fig. 7 nach oben und unten mittels eines Lenkmotors ausgelenkt werden kann.

Das Kabel 40 wird, wie erläutert wurde, unterhalb der Unterkante der Seitenwand 44 geführt. In der Darstellung der Fig. 7 ebenfalls zu erkennen ist die Kabelhalteschelle 86, der Träger 88 und der Abweiserstab 90. Um zu verhindern, dass das Kabel 40 vor die Rollen der Lenkachse 34 gerät, ist der Teilrahmen des Transportwagens 10 benachbart zu den Rollen mit einem Kabelabweiser 92 versehen. Der Kabelabweiser 92 ist als Stab ausgebildet, der sich mit seiner Unterseite, siehe auch Fig. 8, parallel zur Fahrbahn erstreckt, wobei zwischen einer Unterseite des Kabelabweisers 92 und der Fahrbahn 16 nur ein Zwischenraum vorhanden ist, der deutlich kleiner ist als der Durchmesser des Kabels 40. Wie in Fig. 8 zu erkennen ist, verhindert der Kabelabweiser 92 dadurch, dass das Kabel 40 unter den Transportwagen 10 und vor die Rollen der Lenkachse 34 gerät.

Weitere Kabelabweiser wie der Kabelabweiser 92 können noch an weiteren Positionen im Bereich der Unterseite des Transportwagens 10 vorgesehen sein, um zuverlässig zu verhindern, dass die Kabel 40 unter den Transportwagen 10 gerät.

Die Darstellung der Fig. 9 zeigt schematisch eine Vorderansicht des Kabels 40. Das Kabel 40 ist als Koaxialkabel ausgebildet und weist eine isolierende Umhüllung 94, einen ersten im Querschnitt kreisringförmigen elektrischen Leiter 96 und einen im Querschnitt kreisförmig ausgebildeten Mittelleiter 98 auf. Zwischen den konzentrisch zueinander angeordneten zweiten Leiter 98 und ersten Leiter 96 ist ein Dielektrikum 100 vorgesehen, beispielsweise Kunststoff. Das Kabel 40 ist somit als Koaxialkabel ausgebildet. Das Kabel 40 ist dadurch für die schnelle und zuverlässige Übertragung auch von großen Datenmengen geeignet. Gleichzeitig kann das Kabel 40 auch für die Energieübertragung zu den Transportwagen 10 verwendet werden. Die Datenübertragung und die Energieübertragung können dabei gleichzeitig erfolgen. Für die Datenübertragung wird ein serielles Busprotokoll verwendet. Schnittstelleneinheiten sind dann innerhalb des Transportwagens 10 sowie auch im Bereich der Kabeltrommeln 62 angeordnet.

## Patentansprüche

1. Transportsystem für Paletten (18) mit wenigstens zwei selbstfahrenden Transportwagen (10), wobei die Transportwagen (10) jeweils geeignet sind, eine zu einer Fahrbahn (16) hin offene Durchgangsöffnung (20) zwischen einer auf der Fahrbahn (16) stehenden Palette (18) und der Fahrbahn (16) in zwei entgegengesetzten Richtungen vollständig zu durchfahren und wobei die Transportwagen (10) mittels Kabeln (40) mit Energie und/oder Daten versorgt sind, wobei die Kabel (40) zu wenigstens einer Kabeltrommel (62) führen, die unterhalb der Fahrbahn (16) angeordnet ist, wobei die Fahrbahn (16) sich bis zu einer Laderampenkante (76) zum Beladen oder Entladen von LKWs erstreckt, **dadurch gekennzeichnet, dass** die Kabeltrommel (62) im Bereich unterhalb der Laderampenkante (76) angeordnet ist, so dass die Kabel im Wesentlichen nur auf der Ladefläche des LKWs aufliegen, während sich die Transportwagen auf der Ladefläche des LKWs befinden.

2. Transportsystem nach Anspruch 1, **dadurch gekennzeichnet, dass** jedem Transportwagen (10A, 10B, 10C, 10D, 10E, 10F) ein Kabel (40A, 40B, 40C, 40D, 40E, 40F)und eine Kabeltrommel (62A, 62B) zugeordnet ist.

3. Transportsystem nach Anspruch 1 oder 2, **dadurch gekennzeichnet, dass** im Bereich der Fahrbahn (16) eine Kabelumlenkung (48) vorgesehen ist und die wenigstens eine Kabeltrommel (62) im Wesentlichen senkrecht zur Fahrbahn (16) unterhalb der Kabelumlenkung (48) angeordnet ist.

4. Transportsystem nach einem der vorstehenden Ansprüche, **dadurch gekennzeichnet, dass** die Kabelumlenkung (48) im Bereich der Laderampenkante (76) angeordnet ist und die Kabeltrommel (62) unterhalb der Laderampenkante (76) so angeordnet ist, dass sich der Umfang der Kabeltrommel (62) nicht über die Laderampenkante (76) hinaus erstreckt.

5. Transportsystem nach einem der vorstehenden Ansprüche, **dadurch gekennzeichnet, dass** die Laderampenkante (76) an einem Vorbau (60) angeordnet ist, der die Fahrbahn (16) aus einem Gebäude (56) heraus verlängert, wobei die Kabeltrommel (62) innerhalb des Vorbaus (60) angeordnet ist.

6. Transportsystem nach einem der vorstehenden Ansprüche, **dadurch gekennzeichnet, dass** die Kabeltrommel (62) ausgebildet ist, das Kabel (40) zu den Transportwagen (10) permanent unter Zug zu halten.

7. Transportsystem nach einem der vorstehenden Ansprüche, **dadurch gekennzeichnet, dass** das Kabel (40) wenigstens zwei Energieleiter und wenigstens zwei Datenleiter aufweist.

8. Transportsystem nach einem der vorstehenden Ansprüche, **dadurch gekennzeichnet, dass** das Kabel wenigstens zwei zueinander koaxiale Leiter (96, 98) aufweist.

9. Transportsystem nach Anspruch 8, **dadurch gekennzeichnet, dass** das Kabel (40) ausschließlich zwei zueinander koaxiale Leiter (96, 98), die für die Übertragung von Energie und Daten genutzt werden.

10. Transportsystem nach einem der vorstehenden Ansprüche, wobei der Transportwagen für Paletten (18) mit wenigstens einem elektrischen Antriebsmotor (24) und wenigstens einer Steuereinheit für den Antriebsmotor (24) versehen sind, wobei der Transportwagen (10) ausgebildet ist, eine zur Fahrbahn (16) hin offene Durchgangsöffnung (20) zwischen einer auf der Fahrbahn (16) stehenden Palette (18) und der Fahrbahn (16) in zwei entgegengesetzten Richtungen vollständig zu durchfahren, wobei eine Übertragung von Energie und Daten zu und von dem Transportwagen (10) mittels Kabeln erfolgt, **dadurch gekennzeichnet, dass** ein einziges Kabel (40) zur Übertragung von Energie und Daten vorgesehen ist.

11. Transportsystem nach Anspruch 10, **dadurch gekennzeichnet, dass** das Kabel (40) zwei Datenleiter (96, 98) und die Steuereinheit eine Schnittstelle für ein serielles Busprotokoll aufweist.

## Claims

1. Transport system (10) for pallets (18) having at least two self-propelled transport trolleys (10), wherein the transport trolleys (10) are respectively configured to completely run through a passage opening (20), which is open towards a track (16), between a pallet (18) standing on the track (16) and the track (16) in two opposite directions, and wherein the transport trolleys (10) are supplied with power and/or data by means of cables (40), wherein the cables (40) lead to at least one cable reel (62) disposed below the track (16), wherein the track (16) extends up to a loading ramp edge (76) for loading or unloading of trucks, **characterized in that** the cable reel (62) is disposed in the region below the loading ramp edge (76) such that the cables rest essentially only on the loading platform of the truck, while the transport trolleys are on the loading platform of the truck.

2. Transport system according to claim 1, **characterized in that** each transport trolley (10A, 10B, 10C, 10D, 10E, 10F) is assigned a cable (40A, 40B, 40C, 40D, 40E, 40F) and a cable reel (62A, 62B).

3. Transport system according to claim 1 or 2, **characterized in that** a cable deflection (48) is provided in the region of the track (16) and the at least one cable reel (62) is disposed essentially perpendicular to the track (16) below the cable deflection (48).

4. Transport system according to any one of the preceding claims, **characterized in that** the cable deflection (48) is disposed in the region of the loading ramp edge (76) and the cable reel (62) is disposed below the loading ramp edge (76) such that the periphery of the cable reel (62) does not extend beyond the loading ramp edge (76).

5. Transport system according to any one of the preceding claims, **characterized in that** the loading ramp edge (76) is disposed on a front building (60) which is an extension of the track (16) out of premises (56), wherein the cable reel (62) is disposed within the front building (60).

6. Transport system according to any one of the preceding claims, **characterized in that** the cable reel (62) is configured to hold the cable (40) to the transport trolleys (10) permanently tensioned.

7. Transport system according to any one of the preceding claims, **characterized in that** the cable (40) includes at least two power conductors and at least two data conductors.

8. Transport system according to any one of the preceding claims, **characterized in that** the cable includes at least two mutually coaxial conductors (96, 98).

9. Transport system according to claim 8, **characterized in that** the cable (40) includes exclusively two mutually coaxial conductors (96, 98) which are used for transmitting power and data.

10. Transport system according to any one of the preceding claims, wherein the transport trolley for pallets (18) is provided with at least one electric drive motor (24) and at least one control unit for the drive motor (24), wherein the transport trolley (10) is configured to completely run through a passage opening (20), which is open towards a track (16), between a pallet (18) standing on the track (16) and the track (16) in two opposite directions, wherein a transmission of power and data to and from the transport trolley (10) is by means of cables, **characterized in that** one single cable (40) is provided for transmitting power and data.

11. Transport system according to claim 10, **characterized in that** the cable (40) includes two data conductors (96, 98) and the control unit includes an interface for a serial bus protocol.

## Revendications

1. Système de transport pour palettes (18) avec au moins deux chariots de transport automoteurs (10), dans lequel les chariots de transport (10) conviennent respectivement pour traverser complètement dans deux directions opposées une ouverture de passage (20) ouverte vers une chaussée (16) entre une palette (18) déposée sur la chaussée (16) et la chaussée (16) et dans lequel les chariots de transport (10) sont alimentés en énergie et/ou en données au moyen de câbles (40), dans lequel les câbles (40) conduisent à au moins un tambour de câble (62) qui est agencé en dessous de la chaussée (16), dans lequel la chaussée (16) s'étend jusqu'à un bord de rampe de chargement (76) destinée au chargement ou au déchargement des camions, **caractérisé en ce que** le tambour de câble (62) est agencé dans la région située en dessous du bord de rampe de chargement (76), de telle manière que les câbles ne reposent essentiellement que sur le plateau de chargement du camion, pendant que les chariots de transport se trouvent sur le plateau de chargement du camion.

2. Système de transport selon la revendication 1, **caractérisé en ce qu'**un câble (40A, 40B, 40C, 40D, 40E, 40F) et un tambour de câble (62A, 62B) est associé à chaque chariot de transport (10A, 10B, 10C, 10D, 10E, 10F).

3. Système de transport selon la revendication 1 ou 2, **caractérisé en ce qu'**il est prévu un renvoi de câble (48) dans la région de la chaussée (16) et ledit au moins un tambour de câble (62) est agencé essentiellement perpendiculairement à la chaussée (16) en dessous du renvoi de câble (48).

4. Système de transport selon l'une quelconque des revendications précédentes, **caractérisé en ce que** le renvoi de câble (48) est agencé dans la région du bord de rampe de chargement (76) et le tambour de câble (62) est agencé en dessous du bord de rampe de chargement (76), de telle manière que la périphérie du tambour de câble (62) ne s'étende pas au-delà du bord de rampe de chargement (76).

5. Système de transport selon l'une quelconque des revendications précédentes, **caractérisé en ce que** le bord de rampe de chargement (76) est agencé sur un avant-corps (60), qui prolonge la chaussée (16) hors d'un bâtiment (56), dans lequel le tambour de câble (62) est agencé à l'intérieur de l'avant-corps (60).

6. Système de transport selon l'une quelconque des revendications précédentes, **caractérisé en ce que** le tambour de câble (62) est réalisé de façon à maintenir le câble (40) vers le chariot de transport (10) en permanence sous traction.

7. Système de transport selon l'une quelconque des revendications précédentes, **caractérisé en ce que** le câble (40) présente au moins deux conducteurs d'énergie et au moins deux conducteurs de données.

8. Système de transport selon l'une quelconque des revendications précédentes, **caractérisé en ce que** le câble présente au moins deux conducteurs (96, 98) coaxiaux l'un à l'autre.

9. Système de transport selon la revendication 8, **caractérisé en ce que** le câble (40) présente exclusivement deux conducteurs (96, 98) coaxiaux l'un à l'autre, qui sont utilisés pour la transmission d'énergie et de données.

10. Système de transport selon l'une quelconque des revendications précédentes, dans lequel le chariot de transport pour des palettes (18) est muni d'au moins un moteur d'entraînement électrique (24) et d'au moins une unité de commande pour le moteur d'entraînement (24), dans lequel le chariot de transport (10) est réalisé de façon à traverser complètement dans deux directions opposées une ouverture de passage (20) ouverte vers la chaussée (16) entre une palette (18) déposée sur la chaussée (16) et la chaussée (16), dans lequel une transmission d'énergie et de données vers et en provenance du chariot de transport (10) est effectuée au moyen de câbles, **caractérisé en ce qu'**il est prévu un seul câble (40) pour la transmission d'énergie et de données.

11. Système de transport selon la revendication 10, **caractérisé en ce que** le câble (40) présente deux conducteurs de données (96, 98) et l'unité de commande présente une interface pour un protocole de bus série.
